# EUROPEAN PATENT APPLICATION

(11) **EP 4 783 325 A1**
(43) Date of publication of application: **29.07.2026**
(21) Application number: 25867250.0
(22) Date of filing: 18.11.2025
(51) Int. Cl.: H01M 50/24

(54) **BATTERY PACK COMPRISING COVER HAVING RECESS FOR SOUND-ABSORBING MATERIAL**

(30) Priority: 29.11.2024 KR 20240175869
(71) Applicant: LG ENERGY SOLUTION, LTD., Seoul 07335 (KR)
(72) Inventor: SON, Hong Se, Daejeon 34122 (KR); KIM, Seok Hee, Daejeon 34122 (KR)
(74) Representative: BCKIP Part mbB
(86) International application number: PCT/KR2025/019089
(87) International publication number: WO 2026/116880

(57) **Abstract**

Disclosed is a battery pack including one or more battery modules, a pack case body configured to receive the battery modules, a cover added so as to cover an open surface of the pack case body, and a sound absorbing material disposed on an outer surface of the cover, wherein a groove is formed in the outer surface of the cover, and at least a part of the sound absorbing material is inserted into the groove.

## Description

### [Technical Field]

This application claims the benefit of priority to Korean Patent Application No. 10-2024-0175869 filed on November 29, 2024, the disclosure of which is incorporated herein by reference in its entirety.

The present invention relates to a battery pack including a cover with a groove for sound absorbing materials. More particularly, the present invention relates to a battery pack including a cover with a groove for sound absorbing materials configured to allow a sound absorbing material to be stably attached thereto, as a battery pack for electric vehicles.

### [Background Art]

Among secondary batteries, which can be repeatedly charged and discharged, lithium secondary batteries are increasingly being applied to a wide range of fields due to advantages of high energy density and excellent lifespan characteristics.

As lithium secondary batteries are also applied to devices requiring high-voltage and high-capacity energy sources, such as electric vehicles and energy storage systems, a battery module including a plurality of battery cells connected in series, in parallel, or in series and parallel, and a battery pack including battery modules connected in series, in parallel, or in series and parallel are being manufactured and used.

A battery pack for electric vehicles may include a pack case body configured to receive battery cells and a cover configured to cover the pack case body. Typically, the battery pack is disposed at an underside of a vehicle. A flange, to which a fastening member is coupled, may be formed at an outer periphery of the pack case body, and the battery pack may be fixed to the underside of the vehicle via the fastening member added to the flange. At this time, the cover configured to cover the pack case body is disposed so as to face the ground.

During driving of an electric vehicle, continuous vibration occurs due to various causes. Since the battery pack attached to the electric vehicle is located at the underside of the vehicle, vibration originating from a road surface affects the battery pack. Furthermore, vibration generated from the battery pack may be transmitted as noise or may directly impact the underside of the vehicle.

The battery pack is attached to the bottom of the vehicle such that the bottom of the pack case body is in contact with the bottom of the vehicle. Since the bottom of the pack case body is relatively thin and large in size, noise generated outside the vehicle may be transmitted to the bottom of the vehicle and radiated into the interior of the vehicle.

Therefore, various attempts are being made to reduce transmission of noise to a driver and/or a passenger.

Patent Document 1 discloses a battery apparatus including a battery lower case, a battery pack assembly installed in the battery lower case, and a battery upper cover fastened to the battery lower case and disposed on the battery pack assembly, wherein a main vibration damping pad for noise reduction is attached to an upper surface of the battery upper cover.

In Patent Document 1, the main vibration damping pad is disposed between the bottom of a vehicle and the battery apparatus to block noise generated by the battery apparatus from being transmitted into interior of the vehicle.

Meanwhile, in a battery pack attached to the bottom of an electric vehicle, if the cover configured to cover the pack case body is disposed so as to face the ground, a sound absorbing material may be added to the cover.

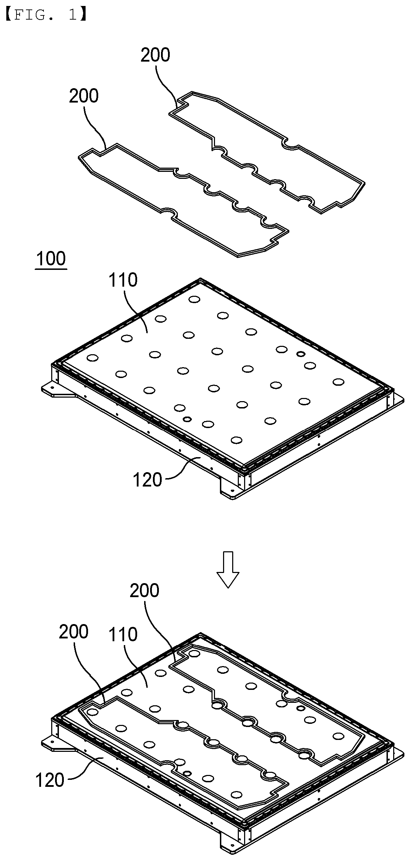

FIG. 1 is a perspective view of a conventional battery pack.

Referring to FIG. 1, the battery pack 100 includes a pack case body 120 and a cover 110 configured to cover the pack case body 120, wherein a sound absorbing material 200 is attached to the top of the cover 110.

The sound absorbing material must remain securely attached during driving of the electric vehicle for decades and hundreds of thousands of kilometers. However, simply placing the sound absorbing material on the cover of the battery pack does not guarantee that the sound absorbing material will not detach during driving.

Therefore, there is a need for technology capable of securely fixing the sound absorbing material added to the cover of the battery pack, thereby preventing separation of the sound absorbing material even during long-term driving.

### (Prior Art Document)

(Patent Document 1) Korean Patent Application Publication No. 2024-0104684 (2024.07.05)

### [Disclosure]

### [Technical Problem]

The present invention has been made in view of the above problems, and it is an object of the present invention to provide a battery pack including a cover with a groove for sound absorbing materials capable of ensuring that a sound absorbing material remains securely fixed when the sound absorbing material is added to a cover of the battery pack disposed so as to face the ground.

### [Technical Solution]

A battery pack according to the present invention to accomplish the above object includes one or more battery modules, a pack case body configured to receive the battery modules, a cover added so as to cover an open surface of the pack case body, and a sound absorbing material disposed on an outer surface of the cover, wherein a groove is formed in the outer surface of the cover, and at least a part of the sound absorbing material is inserted into the groove.

In the battery pack according to the present invention, the sound absorbing material may be made of a compressively deformable material.

In the battery pack according to the present invention, 20% to 60% of the total thickness of the sound absorbing material may be received in the groove.

In the battery pack according to the present invention, the vertical sectional area of the groove may be less than the vertical sectional area of the sound absorbing material.

In the battery pack according to the present invention, a protrusion configured to fix the sound absorbing material may be formed on an inlet side of the groove, and the part of the sound absorbing material inserted into the groove may be fixed in position by the protrusion in a compressed state.

In the battery pack according to the present invention, the sound absorbing material may be fixed in the groove by an adhesive.

In the battery pack according to the present invention, the part of an inner surface of the cover corresponding to the groove formed in the outer surface of the cover may be flat.

In the battery pack according to the present invention, the part of an inner surface of the cover corresponding to the groove formed in the outer surface of the cover may be convex.

In the battery pack according to the present invention, the vertical section of the groove may be polygonal, semicircular, or semi-elliptical.

In the battery pack according to the present invention, the groove may include an inlet side and an interior side, and the sectional area of the groove may be configured such that the width of the inlet side is less than the maximum width of the interior side.

In the battery pack according to the present invention, the sound absorbing material may be constituted by a unit material formed in an unbroken continuous shape, and one unit material or two or more unit materials may be attached to the cover.

In addition, the present invention may provide various combinations of the above solving means.

### [Advantageous Effects]

According to the present invention, a groove, into which at least a part of a sound absorbing material is inserted, is formed in an outer surface of a cover, whereby it is possible to stably fix the sound absorbing material.

In addition, an adhesive is added to the groove, whereby it is possible to further increase the force of fixing the sound absorbing material.

Consequently, it is possible to minimize the transmission of noise to a driver and/or a passenger of an electric vehicle in which a battery pack according to the present invention is mounted and to reduce the risk of damage to the battery pack due to noise.

### [Description of Drawings]

FIG. 1 is a perspective view of a conventional battery pack.
FIG. 2 is a perspective view of a battery pack according to the present invention.
FIG. 3 is a partial enlarged sectional view taken along line A-A' of FIG. 2.
FIG. 4 is a vertical sectional view showing a configuration in which a sound absorbing material with a quadrangular section is added to a cover.
FIG. 5 is a vertical sectional view showing a configuration in which a sound absorbing material with a circular or polygonal section is added to the cover.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Embodiments of the present invention will be described in more detail with reference to the drawings.

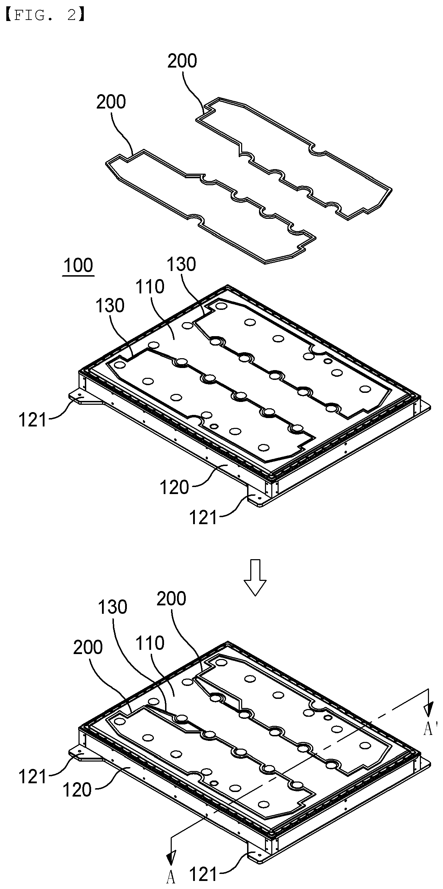

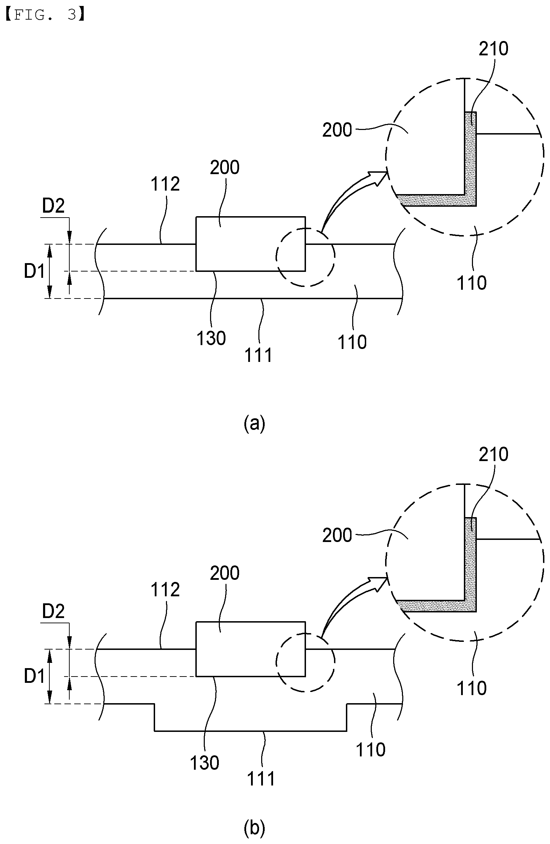

FIG. 2 is a perspective view of a battery pack according to the present invention, and FIG. 3 is a partial enlarged sectional view taken along line A-A' of FIG. 2.

Referring to FIGs. 2 and 3, the battery pack 100 according to the present invention includes one or more battery modules (not shown), a pack case body 120 configured to receive the battery modules, a cover 110 added so as to cover an open surface of the pack case body 120, and a sound absorbing material 200 disposed on an outer surface of the cover 110, wherein a groove 130 is formed in the outer surface of the cover 110, and at least a part of the sound absorbing material 200 is inserted into the groove 130.

The entirety of the sound absorbing material 200 may be inserted into the groove 130, and in FIG. 2, a part of the sound absorbing material 200 is disposed so as to be located outside the groove 130.

Referring to FIG. 3, the groove 130 is concavely formed in the outer surface 112 of the cover 110 in a direction toward an inner surface 111 of the cover, and the depth of the groove 130 may be at least 10% to 60% of the thickness of the cover 110.

If the depth D2 of the groove is less than 10% of the thickness D1 of the cover 110, it is difficult to stably fix the sound absorbing material 200, which is undesirable. If the depth D2 of the groove is greater than 60% of the thickness D1 of the cover 110, the cover becomes thinner, potentially reducing stiffness, which is also undesirable.

Specifically, (a) of FIG. 3 shows that the part of the inner surface 111 of the cover 110 corresponding to the groove formed in the outer surface 112 of the cover is flat, and (b) of FIG. 3 shows that the part of the inner surface 111 of the cover 110 corresponding to the groove formed in the outer surface 112 of the cover is convex. In these cases, the depth D2 of the groove 113 may be 10% to 60% of the thickness D1 of the cover 110 including the depth of the groove.

At this time, 20% to 60% of the total thickness of the sound absorbing material 200 may be received in the groove 130.

If less than 20% of the total thickness of the sound absorbing material 200 is received in the groove, it is difficult to stably fix the sound absorbing material 200, which is undesirable. If greater than 60% of the total thickness of the sound absorbing material 200 is received in the groove, the amount of the sound absorbing material 200 inserted into the groove 130 is unnecessarily increased, which is also undesirable.

In order to stably fix the sound absorbing material 200 in the groove 130, the sound absorbing material 200 may be fixed in the groove 130 by an adhesive 210. For example, the adhesive 210 may be applied to the outer surface of the sound absorbing material 200, and the sound absorbing material 200 may be inserted into the groove 130 such that the sound absorbing material can be fixed. Alternatively, the adhesive 210 may be applied to the groove 130, and the sound absorbing material 200 may be inserted into the groove 130 so as to contact the adhesive 210 such that the sound absorbing material can be fixed.

The vertical section of the groove 130 may be polygonal, semicircular, or semi-elliptical. FIG. 3 shows a groove 130 with a quadrangular vertical section.

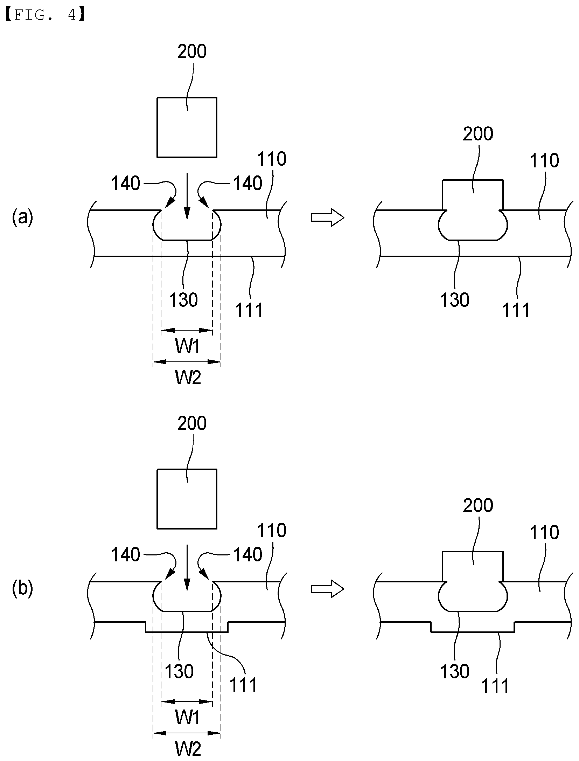

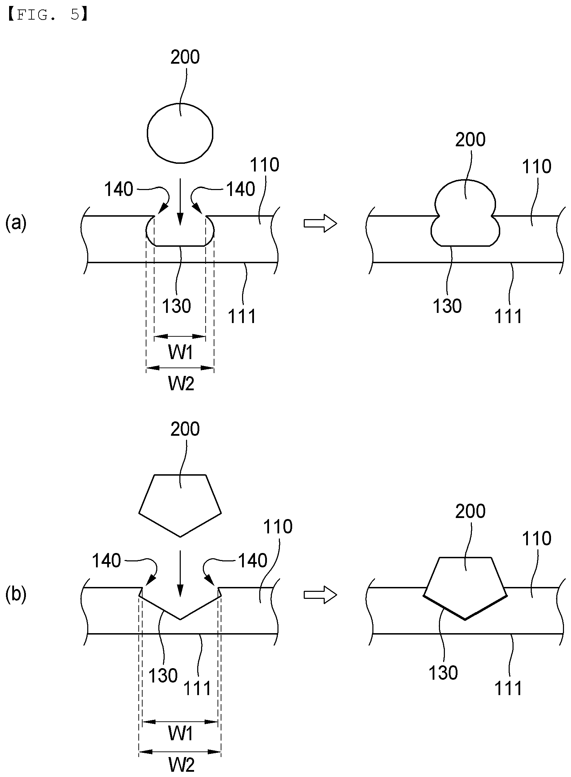

FIG. 4 is a vertical sectional view showing a configuration in which a sound absorbing material with a quadrangular section is added to the cover, and FIG. 5 is a vertical sectional view showing a configuration in which a sound absorbing material with a circular or polygonal section is added to the cover.

Referring to FIGs. 4 and 5, the sound absorbing material 200 is made of a compressively deformable material, and the vertical sectional area of the groove 130 is less than the vertical sectional area of the sound absorbing material 200. Therefore, when inserted into the groove 130, the sound absorbing material 200 undergoes compressive deformation so as to match the size of the groove 130, and the groove 130 is tightly filled with a part of the sound absorbing material 200 inserted into the groove 130 without any empty space therein. As such, a part of the sound absorbing material 200 is fitted in the groove 130 in a compressed state, whereby the sound absorbing material 200 may be fixed in the groove 130 without being separated therefrom.

In addition, a protrusion 140 configured to fix the sound absorbing material 200 is formed on an inlet side of the groove 130, and the protrusion 140 further compresses the sound absorbing material 200 inserted into the groove 130. Therefore, the part of the sound absorbing material 200 inserted into the groove 130 is fixed in position by the protrusion 140 in a compressed state, whereby the sound absorbing material may be more stably fixed in the groove 130.

Specifically, the groove 130 includes an inlet side and an interior side, and the sectional area of the groove is configured such that the width W1 of the inlet side is less than the maximum width W2 of the interior side. Therefore, the part of the sound absorbing material 200 inserted into the groove 130 may be compressed so as to match the internal size of the groove 130, and may be stably fixed by the protrusion 140 located on the inlet side.

In addition, the sound absorbing material 200 shown in FIGs. 4 and 5 may also be fixed in the groove 130 by the adhesive 210, as shown in FIG. 3.

Referring back to FIG. 2, in the battery pack 100 according to the present invention, the sound absorbing material 200 may be constituted by a unit material formed in an unbroken continuous shape, and only one unit material may be attached to the outer surface of the cover 110. Alternatively, as shown in FIG. 2, two unit materials may be attached to the cover 110. Alternatively, grooves may be formed in the cover 110 such that two or more unit materials can be added thereto, and sound absorbing materials matching the respective grooves may be attached to the cover.

The battery pack 100 may be a battery pack for electric vehicles, and may be fixed to an underside of the vehicle.

As a structure for fixing the battery pack to the vehicle, a connection portion 121 extending outward from the bottom of the pack case body 120 is provided. In the state in which the battery pack is inverted such that the cover 110 faces the ground, a fastening member, such as a bolt, may be inserted into the connection portion 121 to fix the battery pack to the underside of the vehicle.

In the battery pack according to the present invention, the groove configured to allow the sound absorbing material to be inserted thereinto may be formed in the cover to physically fix the sound absorbing material, and the sound absorbing material may be fixed using the adhesive, whereby it is possible to minimize separation of the sound absorbing material from the cover.

Consequently, it is possible to eliminate road noise generated during driving of a vehicle, whereby it is possible to reduce transmission of noise into the interior of the vehicle and to minimize damage to the battery pack caused by noise.

Those skilled in the art to which the present invention pertains will appreciate that various applications and modifications are possible within the scope of the present invention based on the above description.

### (Description of Reference Numerals)

- 100:: Battery pack
- 110:: Cover
- 111:: Inner surface
- 112:: Outer surface
- 120:: Pack case body
- 130:: Groove
- 140:: Protrusion
- 200:: Sound absorbing material
- 210:: Adhesive

## Claims

1. A battery pack comprising:
one or more battery modules;
a pack case body configured to receive the battery modules;
a cover added so as to cover an open surface of the pack case body; and
a sound absorbing material disposed on an outer surface of the cover, wherein
a groove is formed in the outer surface of the cover, and
at least a part of the sound absorbing material is inserted into the groove.

2. The battery pack according to claim 1, wherein the sound absorbing material is made of a compressively deformable material.

3. The battery pack according to claim 1, wherein 20% to 60% of a total thickness of the sound absorbing material is received in the groove.

4. The battery pack according to claim 1, wherein a vertical sectional area of the groove is less than a vertical sectional area of the sound absorbing material.

5. The battery pack according to claim 4, wherein
a protrusion configured to fix the sound absorbing material is formed on an inlet side of the groove, and
the part of the sound absorbing material inserted into the groove is fixed in position by the protrusion in a compressed state.

6. The battery pack according to claim 1, wherein the sound absorbing material is fixed in the groove by an adhesive.

7. The battery pack according to claim 1, wherein a part of an inner surface of the cover corresponding to the groove formed in the outer surface of the cover is flat.

8. The battery pack according to claim 1, wherein a part of an inner surface of the cover corresponding to the groove formed in the outer surface of the cover is convex.

9. The battery pack according to claim 1, wherein a vertical section of the groove is polygonal, semicircular, or semi-elliptical.

10. The battery pack according to claim 1, wherein
the groove comprises an inlet side and an interior side, and
a sectional area of the groove is configured such that a width of the inlet side is less than a maximum width of the interior side.

11. The battery pack according to claim 1, wherein
the sound absorbing material is constituted by a unit material formed in an unbroken continuous shape, and
one unit material or two or more unit materials are attached to the cover.
